# FASCICULE DE BREVET EUROPEEN

(11) **EP 2 183 649 B1**
(45) Date de publication et mention de la délivrance du brevet: **13.11.2013**
(21) Numéro de dépôt: 08836142.3
(22) Date de dépôt: 01.09.2008
(51) Int. Cl.: H04M 1/21, G04B 5/20, G04B 47/02, G04B 5/04

(54) **TELEPHONE PORTABLE MUNI D'UNE MONTRE MECANIQUE**
MIT EINER MECHANISCHEN UHR AUSGESTATTETES TRAGBARES TELEFON
PORTABLE TELEPHONE PROVIDED WITH A MECHANICAL WATCH

(30) Priorité: 30.08.2007 FR 0757256
(43) Date de publication de la demande: 12.05.2010
(73) Titulaire: CELSIUS X VI II, 75011 Paris (FR)
(72) Inventeur: ANDRE, Romaric, F-75009 Paris (FR); PRUVOT, Thomas, F-75019 Paris (FR); POIROT, Olivier, F-75019 Paris (FR)
(74) Mandataire: Micheli & Cie SA
(86) Numéro de dépôt international: PCT/FR2008/051554
(87) Numéro de publication internationale: WO 2009/044027

(56) Documents cités:
- EP-A- 1 388 778
- CH-A- 138 641
- CH-A- 144 356
- DE-U- 1 873 094
- FR-A- 717 902
- FR-A- 752 441
- GB-A- 371 730

## Description

L'invention concerne un appareil portable intégrant une fonctionnalité de téléphonie mobile et qui est muni d'une montre mécanique.

Les appareils concernés par l'invention sont des appareils de communication électroniques du type portatif et qui permettent, notamment, à un utilisateur de téléphoner en divers lieux.

Il s'agit par exemple des téléphones portables, assistants personnels numériques (par exemple de type Blackberry qui est une marque déposée), mini ordinateurs...

De tels appareils portables sont utilisés par une grande proportion de la population et équipés de nombreuses fonctionnalités. Depuis plusieurs années, les progrès dans la miniaturisation des composants électroniques ont permis d'inclure appareil photo, caméra, lecteur mp3, GPS ou clavier compact permettant de taper des messages et de consulter Internet.

Comme pour d'autres appareils électroniques, les possesseurs d'appareils portables recherchent de plus en plus souvent des aspects esthétiques et fonctionnels qui leur correspondent. On observe ainsi une tendance chez les utilisateurs à vouloir personnaliser et distinguer leur appareil portable via le choix de sonnerie, de fond d'écran, de fonctionnalité, de couleur ou de design différents.

Bien que la plupart des appareils portables permettent, sur leurs écrans, l'affichage de l'heure (sous divers formats) - voir a titre d'exemple le document EP1388778 -, il existe un souhait chez certaines utilisateurs pour un appareil portable disposant d'une montre mécanique traditionnelle, symbole d'élégance et de prestige, consultable à tout instant et totalement autonome, permettant ainsi son fonctionnement que l'appareil portable soit allumé, éteint ou même déchargé.

Cet ensemble d'un appareil portable muni d'une fonctionnalité de téléphonie mobile et associé à une montre nécessite une configuration particulière d'ordonnancement du téléphone portable pour inclure le volume important de la montre, et pose un problème spécifique pour le remontage du mécanisme horloger traditionnel.

En effet, bien que la montre doive pouvoir rester remontable manuellement, il serait largement préférable que l'utilisateur d'un tel appareil muni d'une montre de prestige puisse se passer de ce geste contraignant et d'ailleurs souvent oublié (ceci impliquant un inévitable déréglage de la montre). Une solution technique particulière alliant esthétique et aspect pratique doit ainsi être recherchée.

L'invention a donc pour objectif de résoudre cette difficulté en proposant un objet innovant résultant de la fusion d'une montre et d'un appareil portable, quel qu'en soit son type, caractérisé en ce qu'une utilisation normale dudit appareil permette le remontage mécanique de la montre.

L'invention propose donc que la montre mécanique, en complément de son remontage traditionnel manuel toujours possible, se voit remontée en exploitant les potentialités de l'énergie cinétique déployée lors d'action(s) simple(s) et constitutive(s) d'une utilisation normale de l'appareil.

Ce type d'action ne comprend pas le simple déplacement de l'appareil portable, par exemple lorsqu'il est transporté par son possesseur.

L'invention a plus particulièrement pour objet un appareil portable possédant une fonction de téléphonie mobile et comportant au moins une montre, caractérisé en ce qu'il comporte un mécanisme de remontage mécanique de la montre, au moins un élément mobile par rapport à l'appareil et qui est relié au mécanisme de remontage mécanique par un dispositif mécanique de transmission de mouvement, l'énergie cinétique déployée lors du déplacement dudit au moins un élément mobile étant communiquée au mécanisme de remontage mécanique de la montre via le dispositif mécanique de transmission de mouvement.

L'actionnement par l'utilisateur d'au moins un élément mobile de l'appareil provoque son déplacement d'une première position à une deuxième position.

Ce déplacement transfère de l'énergie cinétique au mécanisme de remontage mécanique de la montre via le dispositif mécanique de transmission de mouvement et permet ainsi de comprimer le ressort du calibre de la montre.

Selon une caractéristique, le déplacement dudit au moins un élément mobile est effectué lors d'une ou de plusieurs actions constitutives d'une utilisation de l'appareil.

Ainsi, en utilisant l'appareil, par exemple en mettant en oeuvre une de ses fonctionnalités, l'utilisateur transmet à l'appareil de l'énergie qui va servir à remonter la montre intégrée à l'appareil.

Ainsi, le déploiement d'un clapet, l'ouverture d'un cache batterie, le coulissement de l'écran ou l'accès à une fonction précise par coulissement ou pivot de la montre sont, par exemple, autant d'actions survenant lors d'une utilisation normale de l'appareil portable, offrant un potentiel d'énergie mécanique exploitable. Par exemple, un système de masse oscillante bien connu dans l'horlogerie ou un système de jeu d'engrenages ou de courroies permet de tirer profit de ces actions pour fournir l'énergie nécessaire au remontage mécanique de la montre.

La présente invention est adaptable à tous les types d'appareils portables intégrant une fonction de téléphonie (téléphones, assistants personnels numériques, mini ordinateurs...), par exemple ceux constitués de deux parties, articulées autour d'un axe de rotation, rabattables l'une sur l'autre (ci-après dénommés « portable à clapet ») ou ceux en deux parties coulissantes selon deux plans parallèles (ci-après dénommés « portable coulissant »). En plus de ces portables « duo-corps », la présente invention est également adaptable à des portables « monocorps », aussi appelés « monoblocs ».

De façon générale, la montre peut ainsi être fixée sur un des deux rabats d'un appareil portable à clapet, ou fixée sur une des deux parties d'un appareil portable coulissant, ou encore montée de telle sorte à pouvoir pivoter ou coulisser, sur tous types d'appareils portables, pour découvrir un écran, un bloc batterie ou des fonctionnalités sous-jacentes.

L'appareil portable muni d'une montre selon l'invention, présente l'avantage d'une esthétique soignée avec l'apport d'une montre mécanique traditionnelle, sans la contrainte courante du remontage manuel du mécanisme horloger.

Selon les différents modèles d'appareils portables, l'invention est caractérisée par le fait que le mécanisme de remontage est actionné lors d'un geste courant ou classique ou concomitant à une utilisation normale de l'appareil. Selon les exemples de réalisation possibles de l'invention, ce geste implique alors soit la mise en action d'un jeu d'engrenages (ou de courroies, ou d'une charnière, ou d'une crémaillère, etc.), soit la mise en mouvement d'une masse oscillante, ces différents événements étant optimisés mécaniquement pour permettre le remontage de la montre.

La grande diversité des réalisations esthétiques possibles pour cet ensemble « appareil portable - montre » qui, selon l'invention, comporte un remontage mécanique initié par une action courante, est un avantage déterminant vis-à-vis de la personnalisation de cet appareil et pour la conception d'appareils portables haut de gamme. Selon l'invention, le mécanisme de remontage et le positionnement de la montre peuvent varier, entraînant ainsi plusieurs variantes de réalisation.

Selon un mode de réalisation, l'appareil comprend deux parties rabattables l'une sur l'autre et dont l'une porte la montre, le déploiement de l'appareil s'effectuant autour d'un axe de rotation qui fait partie du dispositif de transmission de mouvement.

Selon un autre mode de réalisation, l'appareil comprend deux parties mobiles l'une par rapport à l'autre selon deux plans parallèles et dont l'une porte la montre, le mécanisme de remontage de la montre étant actionné lors du coulissement des deux parties mobiles l'une par rapport à l'autre.

Selon une caractéristique liée à ce mode, le mécanisme de remontage est actionné au moyen du dispositif de transmission de mouvement comprenant un jeu d'engrenages entraîné en rotation par le déplacement d'une crémaillère portée par l'une des parties de l'appareil.

Ainsi, la montre est par exemple portée par l'une des deux parties de l'appareil, tandis que la crémaillère est portée par l'autre partie.

Le jeu d'engrenages est, quant à lui, par exemple agencé dans la partie portant la montre.

Selon un autre mode de réalisation, la montre se déplace seule en pivot ou en translation par rapport à l'ensemble de l'appareil.

La montre se déplace ici de façon indépendante du reste de l'appareil.

Selon une caractéristique liée à ce mode, le déplacement de la montre est mécaniquement mis à profit pour participer au remontage de la montre via le dispositif mécanique de transmission de mouvement associé à une charnière permettant ledit déplacement de la montre.

La montre est ainsi déplacée par pivotement autour d'une articulation.

Selon une autre caractéristique liée à ce mode, le déplacement de la montre permet de découvrir un écran externe, un bloc batterie ou tout autre écran d'affichage sous jacent relié à une fonctionnalité téléphonique ou à une fonctionnalité utile pour l'appareil en tant qu'appareil portable, par exemple un indicateur de charge de la batterie ou de raccordement à un réseau de communication de téléphonie mobile.

Selon encore une autre caractéristique liée à ce mode, le déplacement de la montre permet de découvrir une fonctionnalité non utile pour la téléphonie à l'intérieur de la cavité dans laquelle est repliée la montre, par exemple une boussole, un compas, une photo ou une pièce personnalisée par gravure.

Selon une autre caractéristique liée à ce mode, l'appareil comprend deux parties mobiles l'une par rapport à l'autre, le déplacement indépendant de la montre permettant l'accès à une portion de la partie mobile située sous la montre et sur laquelle elle n'est pas articulée, sans qu'il soit nécessaire d'ouvrir l'appareil portable, par exemple en le dépliant ou en faisant coulisser l'une des parties.

Selon un autre mode de réalisation, le mécanisme de remontage de la montre est actionné lors d'un passage en configuration ouverte dudit au moins un élément mobile, qu'il s'agisse par exemple de l'ouverture de l'appareil, d'un clapet, du déploiement ou du coulissement de la montre, mais débrayé lors du passage en configuration fermée.

Selon une variante de réalisation, le mécanisme de montage de la montre est actionné lors du passage de la « configuration ouverte » de l'appareil à la « configuration fermée ».

On dispose généralement de plus de temps lors de la fermeture de l'appareil que lors de son ouverture et ce temps additionnel peut être mis à profit pour améliorer le remontage mécanique de la montre.

Selon encore un autre mode de réalisation, l'appareil comprend deux parties rabattables l'une sur l'autre, le dispositif de transmission de mouvement comprenant un système de masse libre et linéaire transférant l'énergie cinétique déployée lors de chaque mouvement d'une partie au mécanisme de remontage du calibre.

On notera que la masse libre, le dispositif de transmission et la montre sont, par exemple, intégrés dans une seule partie qui est, par exemple, celle constituant la partie supérieure de l'appareil.

La masse libre en mouvement, intégrée dans un élément mobile de l'appareil, est entrainée dans un déplacement prédéterminé, linéaire ou non, par rapport à l'élément lorsque l'utilisateur actionne/déplace cet élément mobile.

Selon une caractéristique, le dispositif de transmission de mouvement comprend un système de masse oscillante transférant l'énergie cinétique de chaque déplacement dudit au moins un élément mobile de l'appareil au mécanisme de remontage du calibre.

Selon cette caractéristique, la masse libre est entrainée dans un mouvement d'oscillation lors de l'actionnement/déplacement de l'élément mobile. L'élément mobile est, par exemple, l'une des parties constitutives de l'appareil et que l'on déplace pour ouvrir l'appareil. Ce déplacement est par exemple un pivotement autour d'une articulation formant charnière.

Selon une caractéristique, la masse oscillante est alourdie et le bras s'étend en dehors de la zone de l'appareil où la montre est agencée.

En tirant profit du volume de l'appareil autour de la montre, le bras reliant la masse au mécanisme de remontage peut être allongé par rapport aux agencements traditionnels connus en horlogerie.

Il s'ensuit que le bras de levier plus grand permet de gagner du couple mécanique lors d'oscillations et ainsi d'améliorer les performances du remontage mécanique.

Selon une autre caractéristique, la masse oscillante est placée latéralement par rapport au calibre de montre afin de limiter l'épaisseur de l'appareil équipé du dispositif.

En agençant ainsi latéralement la masse on réduit l'encombrement généré par ce dispositif supplémentaire.

De cette façon, l'appareil ainsi équipé respecte les contraintes d'encombrement auxquelles sont soumis ce type d'appareils portables.

Selon un autre mode de réalisation, l'appareil comprend deux parties rabattables l'une sur l'autre et dont l'une porte la montre, le dispositif de transmission de mouvement comprenant un système de rotation complète du calibre, transférant l'énergie cinétique déployée lors de chaque mouvement d'une partie au mécanisme de remontage du calibre (26).

Dans ce mode, la montre entière participe à son remontage.

Plus particulièrement, l'actionnement/le déplacement de la partie mobile de l'appareil qui porte la montre entraine le pivotement de cette dernière.

On notera que lorsque la partie mobile de l'appareil est déplacée, par exemple, par pivotement autour d'une articulation formant charnière, une nouvelle orientation spatiale est ainsi conférée à la montre.

Outre le remontage mécanique, la rotation de la montre associée au déplacement de la partie mobile de l'appareil facilite la lecture de l'affichage de l'heure.

Par exemple, la montre est portée par la partie supérieure rabattable formant clapet.

Selon un autre mode de réalisation, l'appareil comprend une ou plusieurs molettes mobiles en rotation reliées au dispositif de transmission de mouvement pour le remontage de la montre mécanique.

Le simple actionnement d'une molette agencée sur l'une quelconque des faces de l'appareil permet ainsi de remonter (compression de ressort(s)) la montre. Une telle molette présente de façon connue sur ce type d'appareil fait office d'organe et sert, par exemple, au déplacement d'un curseur sur l'écran de l'appareil.

Selon encore un autre mode de réalisation, l'appareil comprend une ou plusieurs touches de clavier dont l'enfoncement est transformé en mouvement de rotation par le dispositif de transmission de mouvement pour le remontage de la montre mécanique.

La simple pression exercée sur une ou plusieurs touches du clavier de l'appareil permet ainsi de remonter la montre.

Selon une caractéristique liée à l'un ou l'autre des deux modes précédents, le dispositif de transmission de mouvement comprend un système d'engrenages.

Selon une caractéristique non liée à un mode de réalisation en particulier, l'appareil comporte un mécanisme de débrayage du mécanisme de remontage lorsque le remontage est pleinement effectué.

Cet agencement supplémentaire permet d'utiliser de façon normale l'appareil (c'est-à-dire en entreprenant les mêmes actions qu'avant le remontage de la montre) une fois que la montre est remontée (et que le ou les ressorts du mécanisme ont été compressés).

D'autres caractéristiques et avantages de l'invention se dégageront de la description qui va suivre en regard des dessins annexés qui ne sont donnés qu'à titre d'exemples non limitatifs.

Les figures 1a à 1c présentent un exemple avantageux de réalisation de l'invention associant une montre mécanique à un téléphone portable à clapet. L'exemple de réalisation y est présenté dans sa configuration fermée de face, fermée de profil, puis dans sa configuration ouverte de profil.

Les figures 2a à 2c illustrent différents dispositifs de transmission envisageables pour le mécanisme de remontage d'une montre portée par le rabat d'un téléphone à clapet (qui est d'ailleurs la configuration décrite sur les figures 1a à 1c).

Les figures 3a à 3c présentent un autre exemple avantageux de réalisation de l'invention associant une montre mécanique à un téléphone portable coulissant. L'exemple de réalisation y est présenté de profil dans sa configuration fermée, puis ouverte et ensuite vu de trois quart en perspective.

Les figures 4a à 4d illustrent trois dispositions possibles de la montre dans d'autres exemples avantageux de réalisation de l'invention où la montre pivote ou coulisse librement par rapport à l'ensemble du téléphone. Les figures 4a et 4b présentent respectivement une montre placée sur le rabat supérieur d'un portable à clapet, puis une montre fixée au cache batterie au dos d'un portable monobloc. Les figures 4c et 4d présentent en configuration haute, puis basse, une montre coulissant, indépendamment du reste du portable, à l'arrière d'un téléphone monobloc.

Les figures 5a et 5b illustrent de face, puis en coupe intérieure, le dispositif composé d'une montre mécanique et de sa masse oscillante permettant son remontage, placé préférentiellement sur le rabat supérieur d'un téléphone portable à clapet.

Les figures 6a à 6c illustrent un exemple de réalisation d'un téléphone muni d'une montre dont le remontage est effectué en utilisant le déplacement d'une masse libre.

Les figues 7a à 7d illustrent un exemple de réalisation d'un téléphone muni d'une montre dont le remontage est effectué en utilisant la rotation d'une molette.

Les figures 8a et 8b illustrent un exemple de réalisation d'un téléphone muni d'une montre dont le remontage est effectué en utilisant le déplacement par enfoncement d'une touche de clavier.

Les figures 9a à 9c illustrent un exemple de réalisation d'un téléphone comportant une montre dont le remontage est assuré par le pivotement de la montre elle-même et qui est occasionné par le déplacement de la partie du téléphone intégrant la montre.

Les figures 10a et 10b illustrent respectivement deux autres exemples de réalisation d'un appareil portable selon l'invention (assistant personnel numérique) coulissant et à clapets rabattables.

Bien que toutes les figures annexées représentent un appareil téléphone portable, il convient de noter que l'invention s'applique à tout type d'appareil portable doté d'une fonctionnalité de téléphonie mobile tel qu'un assistant personnel numérique (de type Blackberry ou Palm qui sont toutes deux des marques déposées) ou bien un mini ordinateur portable, voire même un ordinateur portable.

Ainsi, les mécanismes et dispositifs illustrés sur les figures annexées peuvent être repris en tout ou partie pour être appliqués à d'autres appareils portables.

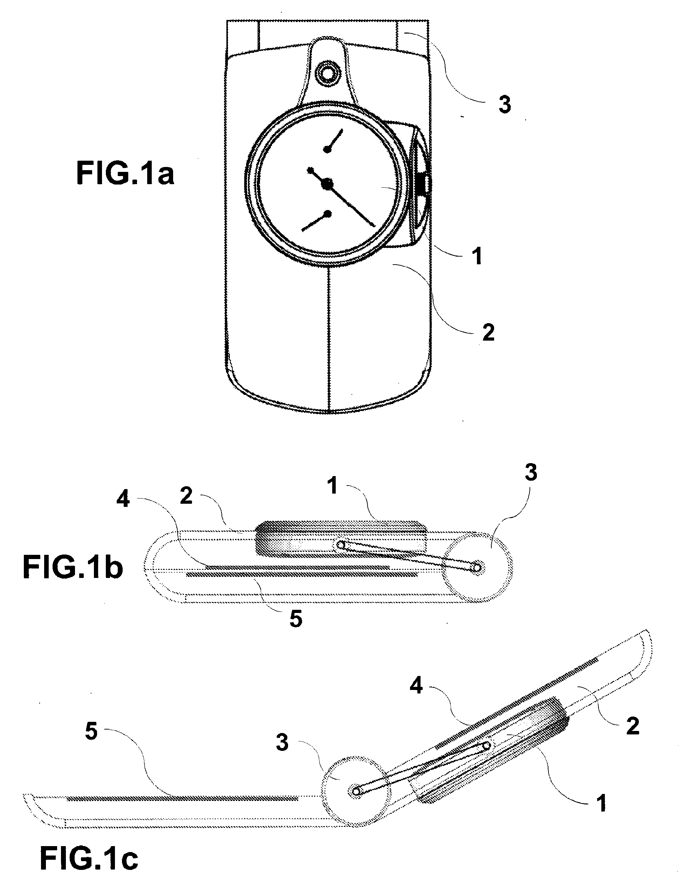

Les figures 1a à 1c présentent le premier exemple avantageux de réalisation de l'invention. Elles concernent un téléphone portable à clapet, le téléphone y étant présenté replié puis ouvert.

Le téléphone portable en deux parties représenté sur les figures 1a à 1c comporte une montre (1) à remontage mécanique placée sur le rabat supérieur (2) de l'appareil. La montre occupe ainsi une surface et un volume relativement importants de la coque du portable.

Pour atteindre la position dépliée (configuration ouverte), le rabat supérieur (2) du portable joue le rôle d'un élément mobile qui pivote grâce à une charnière (3), ce qui permet d'accéder aux fonctionnalités du téléphone, notamment son écran d'affichage (4) et son clavier (5). L'ouverture du portable à clapet se traduisant généralement par un doublement de sa longueur et l'accès à la fois au micro pour parler et à l'écouteur permettant d'entendre le correspondant.

Dans ce premier mode de réalisation de l'invention, c'est à la charnière permettant le déploiement du téléphone portable que le mécanisme de remontage de la montre est relié, lequel remontage est effectué par l'intermédiaire d'un dispositif de transmission mécanique.

Ainsi la montre (1) est portée par un appareil composé de deux parties rabattables l'une sur l'autre, le déploiement du téléphone s'effectuant autour d'un axe de rotation relié au mécanisme de remontage de la montre (1), lequel remontage étant effectué par l'intermédiaire d'une transmission.

On notera que la montre peut être fixée sur l'une ou l'autre des deux parties.

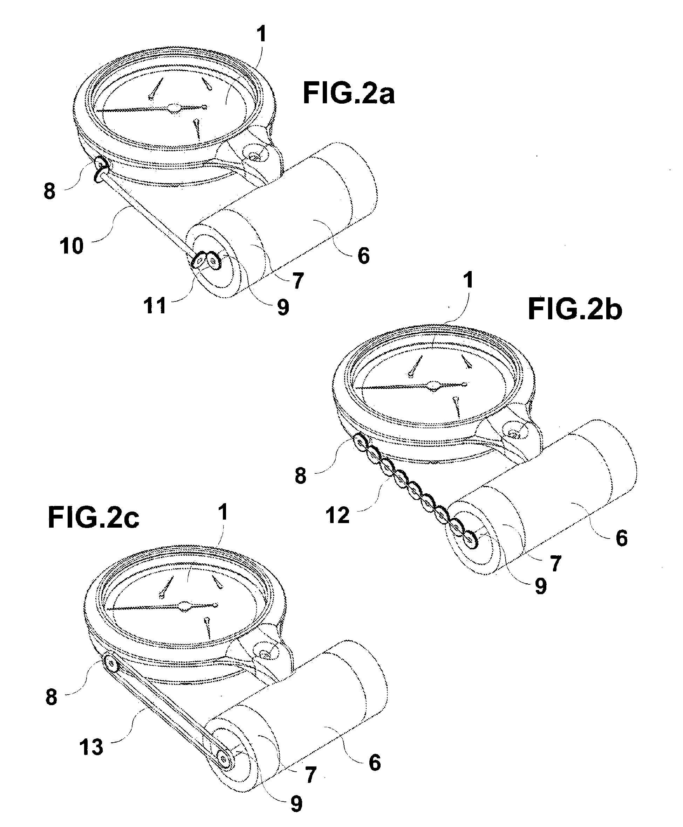

Les figures 2a à 2c représentent différentes configurations possibles pour la transmission du mouvement entre l'articulation des deux parties du téléphone et le remontoir de la montre.

La charnière officiant comme articulation entre les deux parties du téléphone est constituée de manière classique par deux emboîtements coaxiaux dont un élément (6) est solidaire de la partie mobile portant la montre (1), et un cylindre (7) est solidaire de la deuxième partie considérée comme fixe par rapport à l'autre, car généralement maintenue par la main de l'utilisateur.

Pour que le mécanisme de remontage mécanique de la montre relié au remontoir (8) puisse être actionné, une transmission est placée entre l'axe de rotation (9) coaxial de l'articulation joignant les deux parties du téléphone et le remontoir (8).

Selon l'invention, différentes transmissions sont possibles et trois exemples de réalisation sont représentés sur les figures 2a à 2c.

La figure 2a illustre une transmission au moyen d'un arbre rigide (10) actionné en rotation par une roue dentée (11) solidaire de l'axe (9). L'arbre rigide (10) transmet le mouvement de rotation au remontoir (8) par l'intermédiaire d'une autre roue dentée.

La figure 2b montre une transmission réalisée au moyen d'un train de pignons (12) disposés entre l'axe (9) et le remontoir (8).

La figure 2c illustre une transmission par une courroie (13) placée entre une roue solidaire de l'axe (9) et le remontoir (8).

Dans les trois représentations de transmissions, la mise en rotation de l'axe (9) lors de l'ouverture/la fermeture du portable a pour effet d'entraîner la rotation de la transmission et le remontage de la montre.

Selon un deuxième mode de réalisation de l'invention, la montre est portée par la partie inférieure d'un téléphone portable coulissant, le mécanisme de remontage de la montre profitant du coulissement des deux parties mobiles pour s'actionner. Ceux parties mobiles se déplacent dans deux plans parallèles entre eux.

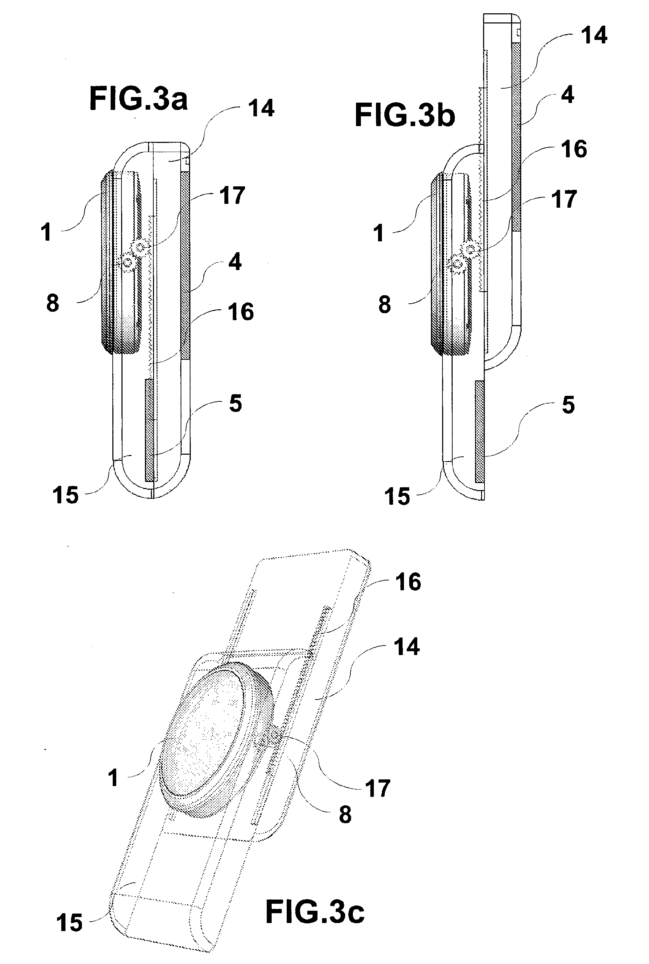

Ce mode est illustré sur les figures 3a à 3c.

Le téléphone portable considéré ici est formé d'une partie supérieure (14) (supportant généralement l'écran (4) du téléphone) qui est capable de se déplacer par coulissement vers le haut pour faire apparaître le clavier (5) du téléphone généralement porté par la partie inférieure (15). Le coulissement de ces deux parties dont l'une joue le rôle d'élément mobile est illustré à travers les figures 3a et 3b.

Dans ce deuxième mode, la montre est placée sur la partie inférieure (15) du téléphone coulissant. Les figures 3a à 3c mettent en évidence le principe d'un mécanisme possible de remontage de la montre mécanique. Celui-ci comprend une crémaillère (16) (placée sur la partie supérieure (14) du portable) et un jeu d'engrenages (17) (placé sur la partie inférieure (15) du portable) formant une transmission par roues dentées entre le remontoir (8) et ladite crémaillère.

Selon ce mode, lorsque la partie supérieure (14) se déplace en translation, les roues dentées sont entraînées en rotation et le remontoir (8) est actionné.

Ainsi, selon l'invention, le mécanisme de remontage d'une montre placée sur un téléphone de type coulissant peut être actionné au moyen d'un jeu d'engrenages entraîné en rotation par le déplacement d'une crémaillère portée par la partie supérieure (14) du téléphone.

Les deux modes de réalisation décrits précédemment conviennent particulièrement à des téléphones de type « duo-corps » ou à d'autres appareils portables présentant la même configuration générale. La montre y est solidairement fixée à une des parties et le mécanisme de remontage, actionné lors de l'ouverture et de la fermeture et du portable, s'appuie sur l'articulation/la liaison des parties entre elles. Cependant, il est aussi envisageable de positionner la montre sur une articulation indépendante de l'ouverture ou de la fermeture de l'appareil et, donc d'appliquer les mécanismes ci-dessus à des appareils portables monoblocs.

Selon un troisième mode de réalisation, qui concerne tous les types de téléphones portables (mono ou duo-corps), la montre est placée de telle manière qu'elle puisse se déplacer en pivot ou en translation et ce, indépendamment par rapport au reste du téléphone.

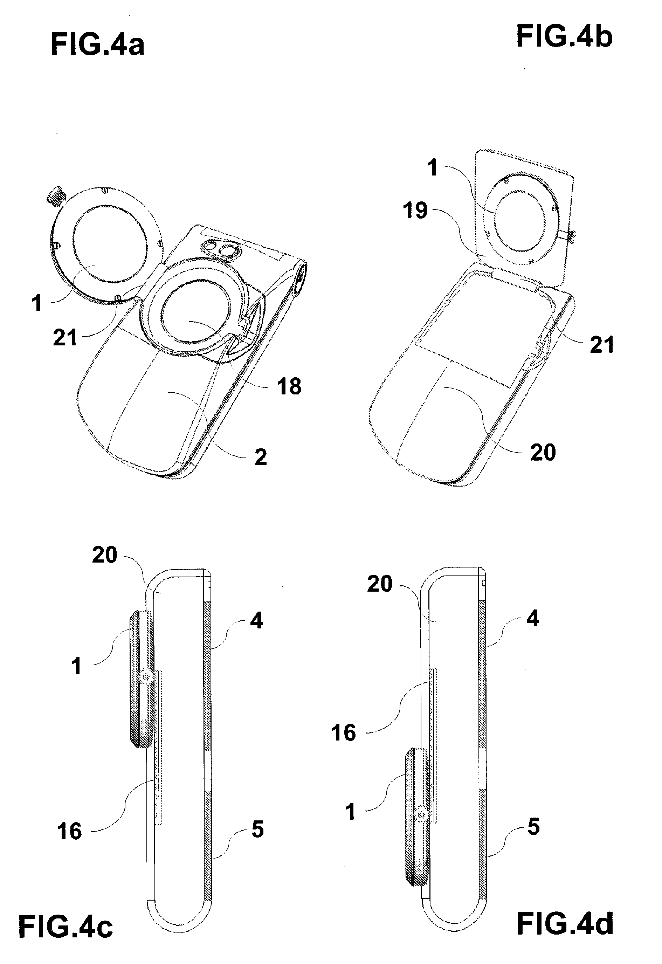

Les réalisations avantageuses de ce mode sont présentées sur les figures 4a à 4d.

La figure 4a représente une montre (1) placée sur le rabat supérieur (2) d'un téléphone portable à clapet. Le pivotement de la montre (1) découvre l'écran externe (18) du portable à clapet.

La figure 4b présente, quant à elle, une montre (1) assujettie, par exemple, à un cache batterie (19) dont l'ouverture permet d'accéder au bloc batterie situé au dos d'un téléphone portable monobloc (20).

Dans ces deux configurations, le mécanisme de remontage de la montre (1) est actionné via un dispositif de transmission mécanique de mouvement associé à la charnière (21) qui permet le pivotement indépendant de la montre. Ce mécanisme de remontage est actionné suivant le principe de transmission mécanique décrit préalablement dans le premier mode de réalisation de l'invention.

Les figures 4c et 4d représentent le coulissement de la montre mécanique (1) placée à l'arrière d'un téléphone monobloc (20) disposant généralement sur sa face principale d'un écran (4) et d'un clavier (5). Ce coulissement permet de découvrir, par exemple, le bloc batterie. Dans cette configuration, le mécanisme de remontage est actionné selon le principe de transmission mécanique décrit préalablement dans le deuxième mode de réalisation de l'invention sollicitant une crémaillère (16).

Ainsi, avantageusement selon l'invention, le pivotement ou le coulissement indépendant de la montre par rapport au téléphone, en même temps qu'il participe au remontage de la montre, permet de découvrir un écran d'affichage, d'accéder au bloc batterie, d'accéder à une fonctionnalité téléphonique ou à une fonctionnalité utile pour l'appareil en tant que téléphone, par exemple un indicateur de charge de la batterie ou de raccordement au réseau de communication pour la téléphonie mobile.

De même, il est également possible que le déplacement de la montre permette de découvrir une fonctionnalité non utile pour la téléphonie. Ainsi, l'intérieur de la cavité dans laquelle est placée la montre en configuration fermée pourrait, par exemple, laisser apparaître en configuration ouverte une boussole, un compas, une photo ou une pièce personnalisée par gravure.

Toujours selon ce troisième mode, il est également envisagé un téléphone portable comportant deux parties mobiles l'une par rapport à l'autre, dans lequel le déplacement de la montre permet l'accès à la portion de la partie mobile située sous la montre et sur laquelle elle n'est pas articulée, sans qu'il soit nécessaire de déplier ou de faire coulisser le téléphone portable.

Il est aussi envisageable, dans ce troisième mode, que par son pivotement ou son coulissement indépendant, la montre constitue une protection amovible d'une portion du téléphone portable, quel que soit le type de ce dernier.

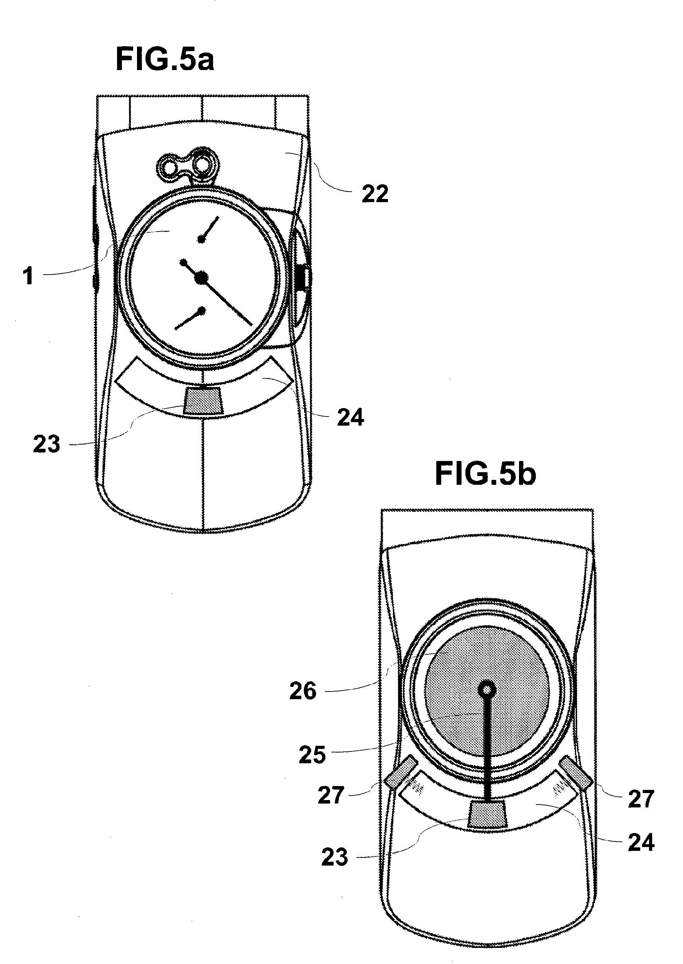

Dans un quatrième mode de réalisation, illustré à travers les figures 5a et 5b, la montre (1) est montée sur un téléphone portable (22), quel qu'en soit son type (même si elle est représentée ici sur le rabat supérieur d'un portable à clapet). Cette montre est remontée via le balancement d'une masse oscillante (23) évoluant au gré des déplacements imposés au téléphone portable par son utilisateur et/ou lors du déplacement par l'utilisateur d'une partie mobile de l'appareil portant la montre.

On notera que l'appareil est, par exemple, en deux parties qui sont mobiles l'une par rapport à l'autre.

L'une des parties intégrant la montre se déplace soit par déploiement (pivotement) autour d'une articulation formant charnière soit par coulissement lors de l'ouverture/fermeture de l'appareil.

Lors de ce déplacement la masse oscillante est entrainée en mouvement.

Le principe général de ce mécanisme impliquant une masse oscillante, traditionnellement qualifié de « remontage automatique », est bien connu dans l'horlogerie puisque largement utilisé sur les montres-bracelets.

La figure 5a illustre ce mode en présentant une vue de face du téléphone comportant la montre (1), sa masse oscillante (23) cloisonnée dans un espace aménagé sous la montre (1) et dont la course en va-et-vient est visible à travers une vitre (24).

La figure 5b illustre une coupe intérieure faisant apparaitre une vue arrière de ce dispositif. On y voit la masse oscillante (23) reliée par son bras (25) au calibre (26) de la montre mécanique. La masse évolue ici librement sur un arc de cercle d'environ 90° et voit sa course en va-et-vient bornée par des pièces formant butées (27) disposées aux extrémités de l'espace contenant la masse oscillante. Néanmoins, d'autres exemples de réalisation pourraient proposer une plus grande amplitude de la course de la masse, voire même la proposer totalement libre sur 360°.

Le mécanisme traditionnel du remontage automatique d'une montre par masse oscillante est bien connu. Traditionnellement dans ce système, la masse oscillante, placée à l'arrière du calibre de la montre et contenue dans le boîtier de la montre, évolue librement sur 360°.

L'invention souhaite proposer ici une solution technique pertinente permettant l'adaptation de ce principe de masse oscillante aux contraintes (par exemple d'encombrement) relatives à un support particulier qu'est l'appareil portable tel qu'un téléphone.

Dans ce mode de réalisation, la solution est ici, par rapport au dispositif traditionnellement observé en horlogerie sur les montres-bracelets, d'augmenter le rendement cinétique de la masse en l'alourdissant et en allongeant le bras (25). En outre, on peut chercher à réduire l'épaisseur globale du dispositif en ne disposant plus la masse derrière le calibre (26) mais de manière latérale par rapport à celui-ci grâce à son fin bras rallongé.

Chacun des modes de réalisation décrits précédemment impliquant un déploiement de charnière ou un coulissement sont caractérisés par l'existence d'une configuration « ouverte » et d'une configuration « fermée ». Il est à noter que le mécanisme de remontage de la montre couplé à ces modes n'est actionné que dans un sens, et préférentiellement lors de l'action visant à passer de la configuration fermée à ouverte. Parallèlement, l'action visant à passer de la configuration ouverte à fermée implique, quant à elle, un débrayage automatique du mécanisme de remontage de la montre. Ce débrayage s'opère de la même manière que sur les montres-bracelets à remontage mécanique manuel lorsque le remontoir est actionné en sens inverse de celui prévu pour le remontage.

Concernant le quatrième mode de réalisation impliquant une masse oscillante, il convient de noter que, quel que soit le type de mouvement que le téléphone portable ou une partie de celui-ci portant la montre subit, et donc quel que soit le sens de la course qu'effectue ladite masse, il est possible d'en utiliser l'énergie cinétique pour recharger la montre.

Par ailleurs, afin de limiter les contraintes dangereuses pour la montre, l'appareil selon l'invention, comporte un mécanisme de débrayage du mécanisme de remontage de la montre lorsque celui-ci est pleinement effectué. Il peut ainsi être prévu un limiteur de couple afin de débrayer l'entraînement du remontoir.

Plusieurs variantes d'appareil portable comportant une montre mécanique sont possibles, différentes transmissions sont réalisables pour coupler le mouvement de la montre, d'une partie de l'appareil (ex : clapet) ou de l'appareil lui-même, avec son mécanisme de remontage. La montre peut être positionnée sur différents types d'appareils, sur différentes parties de ceux-ci et même être articulée indépendamment de ces parties, sans sortir du cadre de l'invention.

Différentes montres mécaniques sont bien évidemment utilisables, comportant un seul ou plusieurs cadrans, affichant diverses fonctionnalités, proposant diverses complications ou présentant des esthétiques variées, sans sortir du cadre de l'invention.

L'appareil portable considéré peut comporter toutes les fonctionnalités connues des appareils actuels et les options additionnelles classiques telles que appareil photo, caméra, connexion Internet, GPS, baladeur mp3, réception et émission de message, ou autre, sans sortir du cadre de l'invention.

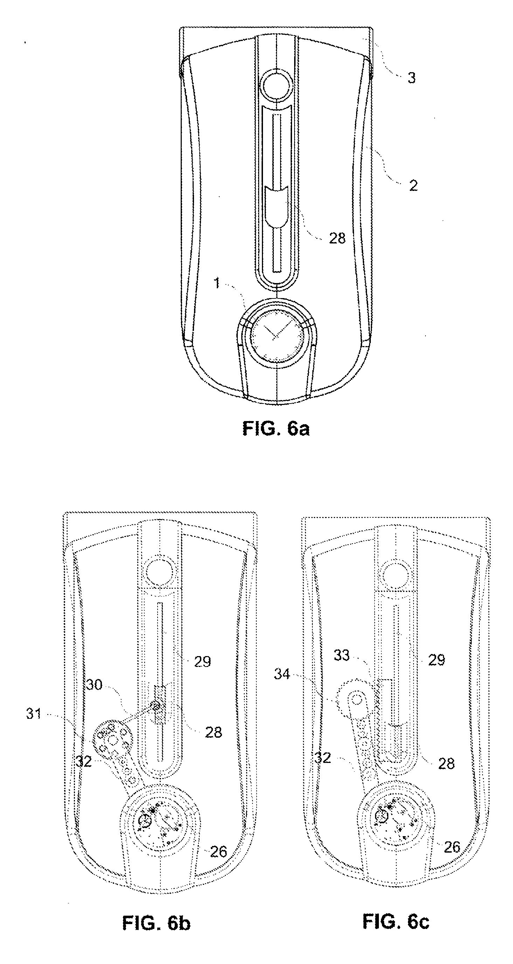

Dans un cinquième mode de réalisation illustré sur les figures 6a, 6b et 6c, l'appareil comprend deux parties ou clapets rabattables l'un sur l'autre. La montre (1) est montée sur le clapet supérieur (2) d'un téléphone portable à clapet muni d'une charnière (3) et elle est remontée par le déplacement linéaire d'une masse (28) qui survient lors des phases d'ouverture et de fermeture du téléphone, i.e. lorsque l'utilisateur soulève ou, au contraire, rabat le clapet supérieur (2) du téléphone.

En effet, on comprend que, lors de l'ouverture du téléphone, la masse (28) se déplace de façon linéaire dans la glissière (29) agencée dans le clapet supérieur sous l'effet de son propre poids. Ce mouvement de la masse (28) est ensuite converti en mouvement de rotation à l'aide de la bielle (30) et du vilebrequin (31). Le mouvement de rotation du vilebrequin (31) est ensuite transmis, par un train d'engrenages (32), au calibre (26) « automatique » traditionnel de la montre (1). Le dispositif de transmission de mouvement décrit ci-dessus est, par exemple, intégré dans le clapet supérieur.

Le principe général d'un calibre dit « automatique » traditionnel impliquant une masse en mouvement, est bien connu dans l'horlogerie puisque largement utilisé sur les montres-bracelets, au détail près que, sur ces dites montres-bracelets, la masse y est mobile en rotation et non en translation.

Selon une variante illustrée à la figure 6c, le couple bielle et vilebrequin peut être remplacé par un système de crémaillère. La masse (28) est ainsi munie d'une crémaillère (33). Lors du déplacement de la masse libre dans la glissière (29), la crémaillère entraine en rotation un pignon d'attaque (34). Ce mouvement de rotation est ensuite transmis par un train d'engrenages (32) au calibre (26) « automatique » traditionnel de la montre (1).

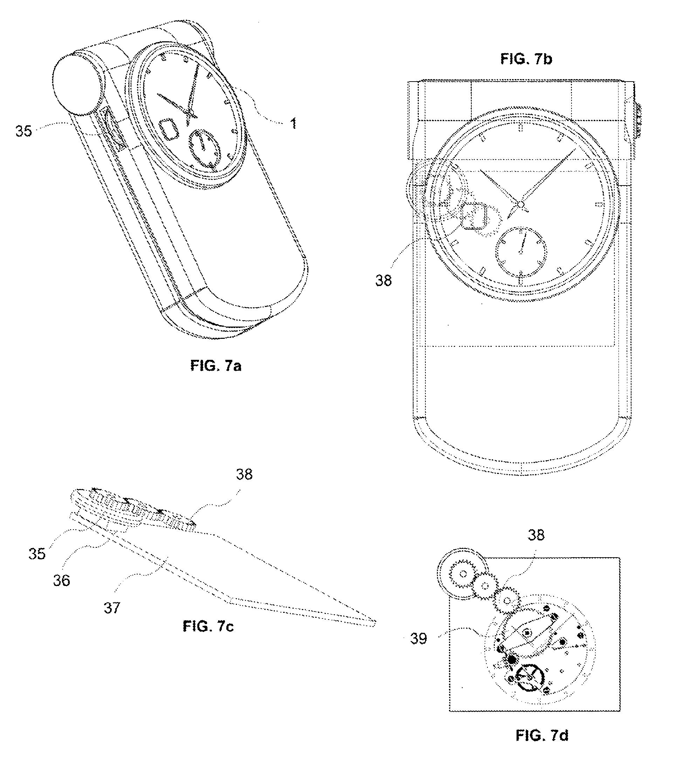

Un sixième mode de réalisation, représenté sur les figures 7a à 7d, concerne un appareil portable qui est ici à clapet rabattable. Toutefois, ce mode de réalisation s'applique à tout type d'appareil (monobloc, coulissant ou à clapet) disposant d'une montre mécanique (1) ainsi que d'une molette (35) qui peut servir à contrôler diverses fonctions électroniques (telles que le réglage du volume et/ou le zoom de la caméra et/ou la navigation dans une liste de menus, etc.). Classiquement, ces molettes sont mises en rotation par l'utilisateur de l'appareil mobile (par exemple téléphone mobile), ce mouvement étant transmis à un composant électronique (36) (de type encodeur par exemple) soudé à une carte électronique (37) et qui envoie les informations sous forme de signaux électriques au reste de l'électronique de l'appareil. Selon ce sixième mode la mise en rotation de la molette (35) (voire de plusieurs molettes), qui peut prendre toute forme et être agencée à tout endroit sur l'appareil mobile (sur l'une quelconque des faces de l'appareil), est également mise à profit pour remonter la montre mécanique via un train d'engrenages (38) entraînant l'axe servant au remontage du calibre (39) de la montre (figure 7d). Afin de ne pas bloquer la molette lorsque le calibre de la montre est totalement remonté, un limiteur de couple ou un système de débrayage est intercalé en sortie de l'axe de remontage de la montre.

On notera que la molette est ici localisée sur l'une des faces latérales de l'appareil mais elle pourrait par exemple être positionnée sur la face avant de l'appareil et, lorsque l'appareil est en deux parties, sur n'importe quelle face de l'une des parties.

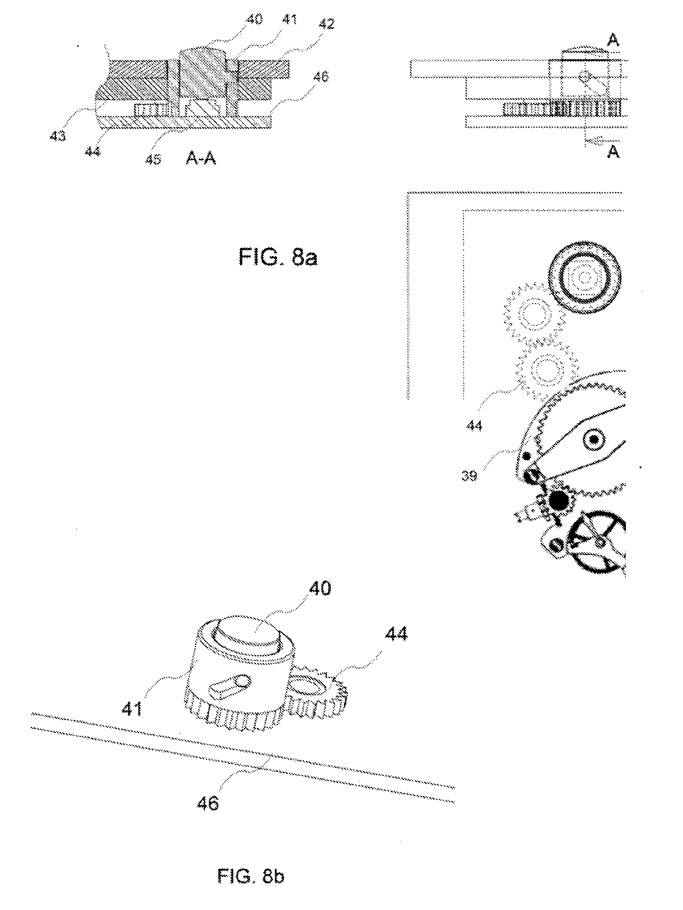

Un septième mode de réalisation, représenté sur les figures 8a et 8b, concerne un appareil portable de tout type (monobloc, coulissant ou à clapet) disposant d'une montre mécanique et d'un clavier à touches électromécaniques (c'est-à-dire un clavier de téléphone classique, non tactile). Dans ce mode l'utilisation normale du clavier participe au remontage mécanique de la montre mécanique. Ainsi, lorsque l'utilisateur exerce une pression sur les touches, dans le même temps :
- d'une part, le mouvement de translation/enfoncement des touches (40) est converti en mouvement de rotation par le biais d'une came (il s'agit par exemple d'une protubérance située sur la pièce 40) et d'une pièce 41 et,
- d'autre part, la touche 40 appuie sur le contacteur électromécanique (45) lui-même soudé à la carte électronique (46).

Lorsque la came se déplace vers le bas lors de l'enfoncement de la touche, la pièce (41) est alors entraînée en rotation de par le mouvement de la came dans la rainure de la pièce 41 (figure 8b). Cette pièce (41) présente également une roue dentée à sa base, permettant de transmettre son mouvement de rotation à un train d'engrenages (44) qui entraîne à son tour l'axe servant au remontage du calibre (39) de la montre.

On notera que les pièces 41et 44 sont montées sur un support, par exemple, sur la pièce 43 et/ou la carte électronique 46.

Afin de ne pas bloquer les touches lorsque le calibre de la montre est totalement remonté, un limiteur de couple ou un système de débrayage est intercalé en sortie de l'axe de remontage de la montre.

Ce principe de relation entre une touche et l'axe de remontage de la montre mécanique peut concerner une ou plusieurs touches du clavier du téléphone portable ou, plus généralement de l'appareil portable à fonction téléphonique mobile.

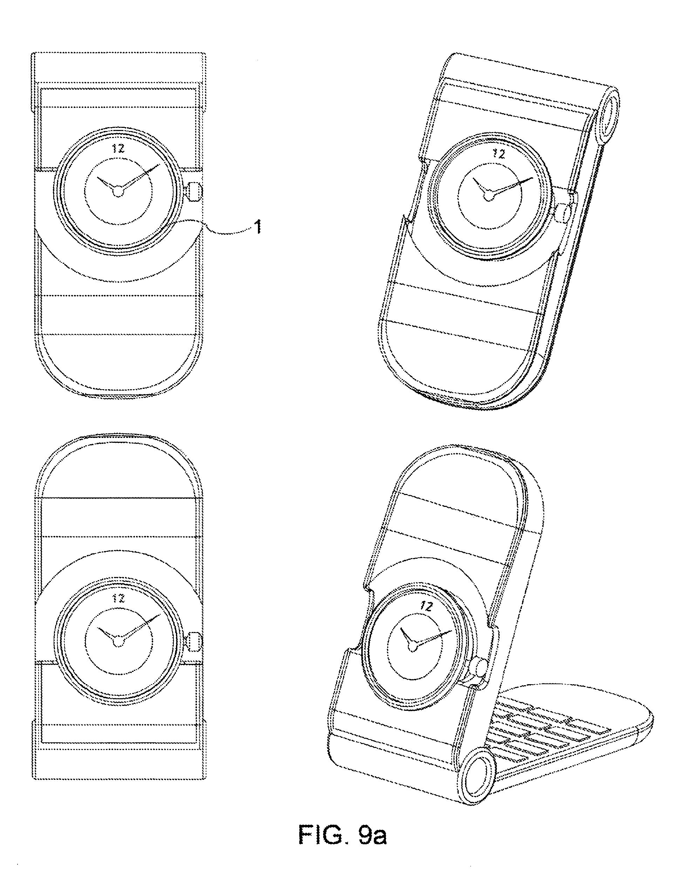

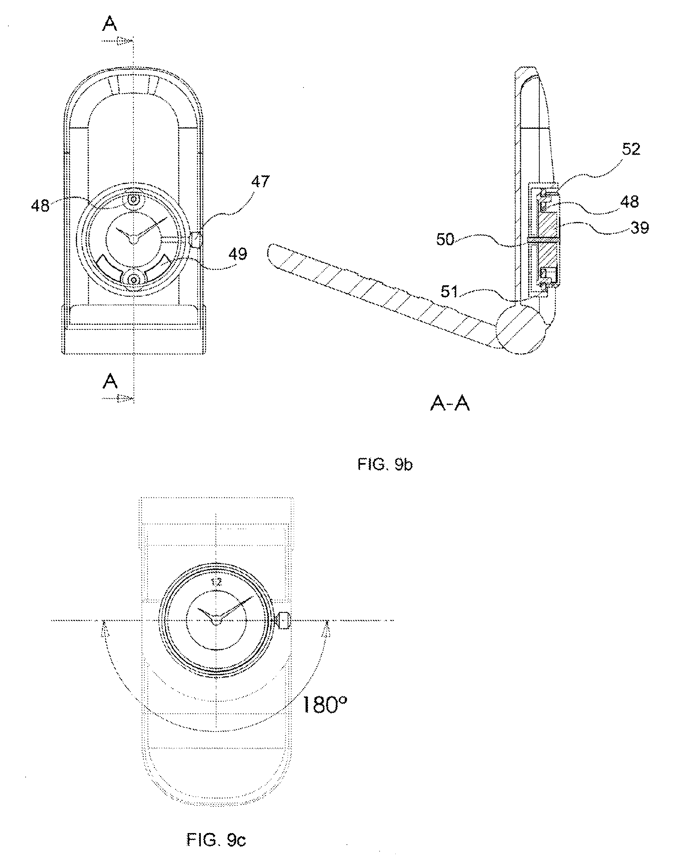

Un huitième mode de réalisation, représenté sur les figures 9a et 9b, concerne un appareil portable à clapet disposant d'une montre mécanique (1). La montre (1) est dotée d'un calibre mécanique à remontage automatique traditionnel. L'axe (50) sur lequel est normalement fixée la masse oscillante du calibre (39) est ici solidaire du boitier principal (51) de la montre, lui même solidaire du clapet de l'appareil. L'ensemble constitué du calibre (39), du remontoir (47), du cadran et du boitier secondaire (52) pivote librement sur un secteur angulaire de 180° par rapport à l'axe (50) (figures 9b et 9c). La rotation de cet ensemble est due à la présence d'une masse (49) sur le boitier secondaire (52) qui crée un balourd et oriente ainsi la montre toujours dans la même direction (figure 9a). Lors de l'ouverture du téléphone, le balourd entraîne la montre en rotation. Cette rotation relative du calibre (39) de la montre par rapport à l'axe fixe (50) entraîne le remontage de la montre mécanique.

La rotation de la montre lestée autour de l'axe (50) est facilitée par la présence d'au moins une roue (48) (deux roues disposées, par exemple, de façon diamétralement opposée sont représentées sur les figures 9a et 9b) qui permet de limiter les efforts de cisaillement dus au poids de l'ensemble sur l'axe (50).

Le remontoir (47) permet la mise à l'heure de la montre ainsi que son éventuel remontage manuel.

Afin de ne pas bloquer la rotation de la montre lorsque celle-ci est totalement remontée, un limiteur de couple ou un système de débrayage est intercalé en sortie de l'axe de remontage de la montre.

Comme déjà mentionné, l'invention et les différents mécanismes exposés ci-dessus concernent des téléphones portables mais aussi, de façon non limitative, des assistants personnels numériques, des mini-ordinateurs...

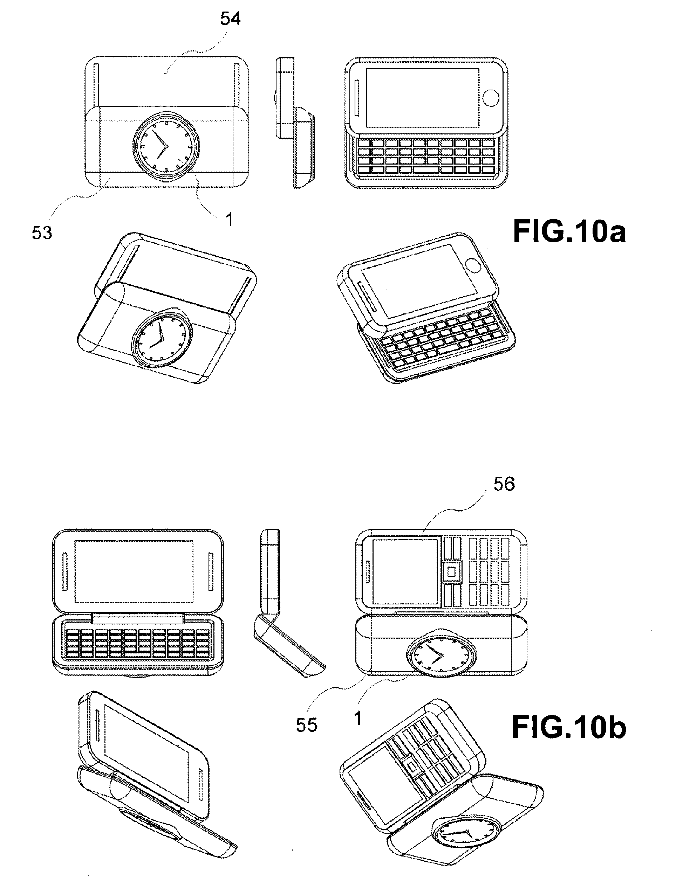

La figure 10a représente ainsi un assistant personnel qui coulisse pour découvrir un clavier (par exemple, de type azerty) complet. Cet appareil portable comprend une partie dite supérieure (54) comprenant un écran (par exemple tactile) sur sa face externe et une partie dite inférieure (53) comprenant d'un côté (sur une face dite interne car masquée par la partie 54 lorsque l'appareil est en configuration fermée) le clavier et du côté opposé (sur sa face opposée dite externe car apparente lorsque l'appareil est fermé) la montre mécanique (1). Comme pour les modes de réalisation précédents, on profite de l'énergie cinétique déployée lorsque les parties coulissent l'une par rapport à l'autre, pour remonter la montre mécanique (1) intégrée à l'appareil.

On notera que l'on peut, par exemple, utiliser l'un des mécanismes illustrés aux figures 3a à 3c, 7a à 7d (si l'appareil comporte une molette rotative ; dans ce cas, il est même possible d'utiliser l'appareil en configuration fermée si la molette est sur l'un des flancs latéraux) ou encore aux figures 8a et 8b.

La figure 10b représente, quant à elle, un assistant personnel à clapet qui découvre un clavier complet. Cet appareil portable comprend un clapet dit supérieur (56) comprenant un écran sur chacune de ses faces opposées, et un clapet dit inférieur (55) comprenant d'un côté (sur une face dite interne) le clavier et de l'autre (sur une face opposée dite externe) la montre mécanique (1) intégrée à l'appareil. Comme pour les modes de réalisation précédents, on profite de l'énergie cinétique déployée lors de l'ouverture/fermeture de l'appareil, par exemple par pivotement des clapets l'un par rapport à l'autre, pour remonter la montre mécanique (1).

On notera que l'on peut, par exemple, utiliser l'un des mécanismes illustrés aux figures 1a à 1c, 2a à 2c, 6a à 6c, 8a et 8b, 9a à 9c.

Selon une variante on peut tirer profit du déplacement d'un autre élément de l'appareil pour transmettre de l'énergie au mécanisme de remontage mécanique de la montre lorsque l'appareil est en position fermée. Ainsi, la mise en rotation d'une molette agencée sur l'une des grandes faces extérieures ou des petites faces extérieures de l'appareil fermé, comme par exemple illustré sur les figures 7a à 7d est envisageable.

Bien entendu, l'invention n'est pas limitée aux modes de réalisation décrits et représentés à titre d'exemples, mais elle comprend aussi tous les équivalents techniques ainsi que leurs combinaisons, comme défini par les revendications annexées.

## Revendications

1. Appareil portable possédant une fonction de téléphonie mobile et comportant au moins une montre (1), **caractérisé en ce qu'**il comporte un mécanisme de remontage mécanique (26) de la montre, au moins un élément mobile par rapport à l'appareil et qui est relié au mécanisme de remontage mécanique (26) par un dispositif mécanique de transmission de mouvement (10,12,13), l'énergie cinétique déployée lors du déplacement dudit au moins un élément mobile étant communiquée au mécanisme de remontage mécanique (26) de la montre via le dispositif mécanique de transmission de mouvement (10,12,13).

2. Appareil portable selon la revendication 1, **caractérisé en ce qu'**il est agencé de telle façon que le déplacement dudit au moins un élément mobile est effectué lors d'au moins une action constitutive d'une utilisation de l'appareil.

3. Appareil portable selon la revendication 2, **caractérisé en ce que** ladite action constitutive d'une utilisation de l'appareil portable est notamment l'ouverture d'un clapet ou d'un cache batterie, le coulissement d'un écran, le pivotement ou le coulissement de la montre (1) permettant l'accès à une fonction précise.

4. Appareil portable selon l'une des revendications 1 à 3, **caractérisé en ce qu'**il comprend deux parties rabattables l'une sur l'autre et dont l'une porte la montre, le déploiement de l'appareil s'effectuant autour d'un axe de rotation qui fait partie du dispositif de transmission de mouvement (10, 12, 13).

5. Appareil portable selon l'une des revendications 1 à 3, **caractérisé en ce qu'**il comprend deux parties mobiles l'une par rapport à l'autre selon deux plans parallèles et dont l'une porte la montre, le mécanisme de remontage de la montre (1) étant actionné lors du coulissement des deux parties mobiles l'une par rapport à l'autre.

6. Appareil portable selon la revendication 5, **caractérisé en ce que** le mécanisme de remontage est agencée pour être actionné au moyen du dispositif de transmission de mouvement comprenant un jeu d'engrenages (17) agencée pour être entraîné en rotation par le déplacement d'une crémaillère (16) portée par l'une des parties (14) de l'appareil.

7. Appareil portable selon l'une des revendications 1 à 3, **caractérisé en ce que** la montre (1) est agencé pour se déplacer seule en pivot ou en translation par rapport à l'ensemble de l'appareil.

8. Appareil portable selon la revendication 7, **caractérisé en ce que** le déplacement de la montre (1) est agencé pour participer mécaniquement au remontage de la montre (1) via le dispositif mécanique de transmission de mouvement associé à une charnière (21) permettant ledit déplacement de la montre (1).

9. Appareil portable selon la revendication 8, **caractérisé en ce que** le déplacement de la montre (1) permet de découvrir un écran externe (18), un bloc batterie ou tout autre écran d'affichage sous jacent relié à une fonctionnalité téléphonique ou à une fonctionnalité utile pour l'appareil en tant qu'appareil portable, par exemple un indicateur de charge de la batterie ou de raccordement à un réseau de communication.

10. Appareil portable selon l'une des revendications 7 à 9, **caractérisé en ce que** le déplacement de la montre (1) permet de découvrir une fonctionnalité non utile pour la téléphonie à l'intérieur d'une cavité dans laquelle est agencée de façon repliée la montre (1), par exemple une boussole, un compas, une photo ou une pièce personnalisée par gravure.

11. Appareil portable selon l'une des revendications 7 à 10 **caractérisé en ce qu'**il comprend deux parties mobiles l'une par rapport à l'autre, le déplacement indépendant de la montre (1) permettant l'accès à une portion de la partie mobile située sous la montre (1) et sur laquelle elle n'est pas articulée, sans qu'il soit nécessaire d'ouvrir l'appareil portable.

12. Appareil portable selon l'une quelconque des revendications précèdentes **caractérisé en ce que** le mécanisme de remontage de la montre (1) est agencé pour être actionné lors d'un passage en une première configuration, dite ouverte dudit au moins un élément mobile, qu'il s'agisse par exemple de l'ouverture de l'appareil, d'un clapet, du déploiement ou du coulissement de la montre (1), mais débrayé lors du passage en une seconde configuration, dite fermée.

13. Appareil portable selon l'une des revendications 1 à 3, **caractérisé en ce qu'**il comprend deux parties rabattables l'une sur l'autre, le dispositif de transmission de mouvement comprenant un système de masse libre et linéaire transférant l'énergie cinétique déployée lors de chaque mouvement d'une des parties (2) au mécanisme de remontage du calibre (26).

14. Appareil portable selon l'une des revendications 1 à 3, **caractérisé en ce que** le dispositif de transmission de mouvement comprend un système de masse oscillante transférant l'énergie cinétique de chaque déplacement dudit au moins un élément mobile de l'appareil au mécanisme de remontage du calibre (26).

15. Appareil portable selon la revendication 14, **caractérisé en ce que** la masse oscillante (23) est alourdie et un bras (25) est agencé pour relier la masse au mécanisme de remontage, ce bras s'étendant en dehors de la zone de l'appareil où la montre est agencée.

16. Appareil portable selon la revendication 14 ou 15, **caractérisé en ce que** la masse oscillante (23) est placée latéralement par rapport au calibre (26) de montre afin de limiter l'épaisseur de l'appareil équipé du dispositif.

17. Appareil portable selon l'une des revendications 1 à 3, **caractérisé en ce qu'**il comprend deux parties rabattables l'une sur l'autre et dont l'une porte la montre, le dispositif de transmission de mouvement comprenant un système de rotation complète du calibre, transférant l'énergie cinétique déployée lors de chaque mouvement d'une des parties (2) au mécanisme de remontage du calibre (26).

18. Appareil portable selon l'une des revendications 1 à 3, **caractérisé en ce qu'**il comprend une ou plusieurs molettes (35) mobiles en rotation reliées au dispositif de transmission de mouvement pour le remontage de la montre mécanique.

19. Appareil portable selon l'une des revendications 1 à 3, **caractérisé en ce qu'**il comprend une ou plusieurs touches (40) de clavier dont l'enfoncement est transformé en mouvement de rotation par le dispositif de transmission de mouvement pour le remontage de la montre mécanique.

20. Appareil portable selon la revendication 18 ou 19, **caractérisé en ce que** le dispositif de transmission de mouvement comprend un système d'engrenages.

21. Appareil portable selon l'une quelconque des revendications précédentes, **caractérisé en ce qu'**il comporte un mécanisme de débrayage du mécanisme de remontage lorsque le remontage est pleinement effectué.

## Patentansprüche

1. Tragbare Vorrichtung, die eine Mobilfunkfunktion aufweist und mindestens eine Uhr (1) umfasst, **dadurch gekennzeichnet, dass** sie einen mechanischen Aufziehmechanismus (26) der Uhr und mindestens ein Element umfasst, das in Bezug zur Vorrichtung beweglich ist und das mit dem mechanischen Aufziehmechanismus (26) über eine mechanische Bewegungsübertragungseinrichtung (10, 12, 13) verbunden ist, wobei die kinetische Energie, die bei der Verlagerung des mindestens einen beweglichen Elements entfaltet wird, über die mechanische Bewegungsübertragungseinrichtung (10, 12, 13) auf den mechanischen Aufziehmechanismus (26) der Uhr übertragen wird.

2. Tragbare Vorrichtung nach Anspruch 1, **dadurch gekennzeichnet, dass** sie derart angeordnet ist, dass die Verlagerung des mindestens einen beweglichen Elements bei mindestens einer wesentlichen Tätigkeit einer Verwendung der Vorrichtung durchgeführt wird.

3. Tragbare Vorrichtung nach Anspruch 2, **dadurch gekennzeichnet, dass** die wesentliche Tätigkeit einer Verwendung der tragbaren Vorrichtung insbesondere die Öffnung einer Klappe oder einer Batterieabdeckung, das Verschieben eines Bildschirms, das Schwenken oder das Verschieben der Uhr (1) ist, wodurch der Zugriff auf eine bestimmte Funktion ermöglicht wird.

4. Tragbare Vorrichtung nach einem der Ansprüche 1 bis 3, **dadurch gekennzeichnet, dass** sie zwei Teile umfasst, die aufeinander umklappbar sind und von denen einer die Uhr trägt, wobei die Öffnung der Vorrichtung um eine Drehachse erfolgt, die Teil der Bewegungsübertragungseinrichtung (10, 12, 13) ist.

5. Tragbare Vorrichtung nach einem der Ansprüche 1 bis 3, **dadurch gekennzeichnet, dass** sie zwei Teile umfasst, die in Bezug zu einander entlang von zwei parallelen Ebenen beweglich sind und von denen eines die Uhr trägt, wobei der Aufziehmechanismus der Uhr (1) bei der Verschiebung der zwei beweglichen Teile in Bezug zueinander betätigt wird.

6. Tragbare Vorrichtung nach Anspruch 5, **dadurch gekennzeichnet, dass** der Aufziehmechanismus angeordnet ist, um mittels der Bewegungsübertragungseinrichtung betätigt zu werden, die einen Satz von Getrieben (17) umfasst, der angeordnet ist, um durch die Verlagerung einer Zahnstange (16) drehbar angetrieben zu werden, die durch einen der Teile (14) der Vorrichtung getragen wird.

7. Tragbare Vorrichtung nach einem der Ansprüche 1 bis 3, **dadurch gekennzeichnet, dass** die Uhr (1) angeordnet ist, um sich alleine gegenüber der gesamten Vorrichtung schwenkbar oder translatorisch zu verlagern.

8. Tragbare Vorrichtung nach Anspruch 7, **dadurch gekennzeichnet, dass** die Verlagerung der Uhr (1) angeordnet ist, um über die Bewegungsübertragungseinrichtung, die einem Scharnier (21) zugehörig ist, das die Verlagerung der Uhr (1) ermöglicht, mechanisch am Aufziehen der Uhr (1) teilzunehmen.

9. Tragbare Vorrichtung nach Anspruch 8, **dadurch gekennzeichnet, dass** die Verlagerung der Uhr (1) das Abdecken eines Außenbildschirms (18), eines Batteriesatzes oder jedes anderen darunterliegenden Anzeigebildschirms ermöglicht, der mit einer Telefonfunktionalität oder einer Funktionalität verbunden ist, die für die Vorrichtung als tragbare Vorrichtung nützlich ist, zum Beispiel eine Anzeige der Batterieladung oder der Verbindung mit einem Kommunikationsnetz.

10. Tragbare Vorrichtung nach einem der Ansprüche 7 bis 9, **dadurch gekennzeichnet, dass** die Verlagerung der Uhr (1) das Abdecken einer Funktionalität, die nicht für das Telefon nützlich ist, im Inneren eines Hohlraums, in dem die Uhr (1) auf zurückgeklappte Weise angeordnet ist, zum Beispiel einer Bussole, eines Kompasses, eines Fotos oder eines durch Gravur personalisierten Teils, ermöglicht.

11. Tragbare Vorrichtung nach einem der Ansprüche 7 bis 10, **dadurch gekennzeichnet, dass** sie zwei in Bezug zueinander bewegliche Teile umfasst, wobei die unabhängige Verlagerung der Uhr (1) den Zugang zu einem Abschnitt des beweglichen Teils ermöglicht, der sich unter der Uhr (1) befindet und auf dem sie nicht gelenkig gelagert ist, ohne dass es erforderlich ist, die tragbare Vorrichtung zu öffnen.

12. Tragbare Vorrichtung nach einem der vorhergehenden Ansprüche, **dadurch gekennzeichnet, dass** der Aufziehmechanismus der Uhr (1) angeordnet ist, um bei einem Übergang in eine erste, sogenannte offene Ausgestaltung des mindestens einen beweglichen Elements, sei es zum Beispiel durch die Öffnung der Vorrichtung, einer Klappe, durch die Verlagerung oder durch die Verschiebung der Uhr (1) betätigt zu werden, jedoch bei dem Übergang in eine zweite, sogenannte geschlossene Ausgestaltung ausgekuppelt zu sein.

13. Tragbare Vorrichtung nach einem der Ansprüche 1 bis 3, **dadurch gekennzeichnet, dass** sie zwei aufeinander umklappbare Teile umfasst, wobei die Bewegungsübertragungseinrichtung ein freies und lineares Massesystem umfasst, das die bei jeder Bewegung von einem der Teile (2) entfaltete kinetische Energie auf den Aufziehmechanismus des Kalibers (26) überträgt.

14. Tragbare Vorrichtung nach einem der Ansprüche 1 bis 3, **dadurch gekennzeichnet, dass** die Bewegungsübertragungseinrichtung ein Schwungmassesystem umfasst, das die kinetische Energie von jeder Verlagerung des mindestens einen beweglichen Elements der Vorrichtung auf den Aufziehmechanismus des Kalibers (26) überträgt.

15. Tragbare Vorrichtung nach Anspruch 14, **dadurch gekennzeichnet, dass** die Schwungmasse (23) beschwert ist und ein Arm (25) angeordnet ist, um die Masse mit dem Aufziehmechanismus zu verbinden, wobei dieser Arm sich außerhalb des Bereichs der Vorrichtung erstreckt, in dem die Uhr angeordnet ist.

16. Tragbare Vorrichtung nach Anspruch 14 oder 15, **dadurch gekennzeichnet, dass** die Schwungmasse (23) in Bezug zum Uhrkaliber (26) seitlich untergebracht ist, um die Dicke der mit der Einrichtung ausgerüsteten Vorrichtung zu begrenzen.

17. Tragbare Vorrichtung nach einem der Ansprüche 1 bis 3, **dadurch gekennzeichnet, dass** sie zwei aufeinander umklappbare Teile umfasst und von denen eines die Uhr trägt, wobei die Bewegungsübertragungseinrichtung ein System der vollständigen Drehung des Kalibers umfasst, das die bei jeder Bewegung von einem der Teile (2) entfaltete kinetische Energie auf den Aufziehmechanismus des Kalibers (26) überträgt.

18. Tragbare Vorrichtung nach einem der Ansprüche 1 bis 3, **dadurch gekennzeichnet, dass** sie eine oder mehrere drehbewegliche Rändelscheiben (35) umfasst, die mit der Bewegungsübertragungseinrichtung zum Aufziehen der mechanischen Uhr verbunden sind.

19. Tragbare Vorrichtung nach einem der Ansprüche 1 bis 3, **dadurch gekennzeichnet, dass** sie eine oder mehrere Tastaturtasten (40) umfasst, deren Drücken durch die Bewegungsübertragungseinrichtung zum Aufziehen der mechanischen Uhr in eine Drehbewegung umgewandelt wird.

20. Tragbare Vorrichtung nach Anspruch 18 oder 19, **dadurch gekennzeichnet, dass** die Bewegungsübertagungseinrichtung ein System von Getrieben umfasst.

21. Tragbare Vorrichtung nach einem der vorhergehenden Ansprüche, **dadurch gekennzeichnet, dass** sie einen Mechanismus zur Auskupplung des Aufziehmechanismus umfasst, wenn das Aufziehen vollständig durchgeführt wurde.

## Claims

1. Portable apparatus having a mobile telephone function and comprising at least one watch (1), **characterised in that** it has a mechanism (26) for mechanical winding of the watch, at least one element which can move with respect to the apparatus and which is connected to the mechanical winding mechanism (26) by a mechanical device for transmission of movement (10, 12, 13), the kinetic energy involved during displacement of the said at least one moveable element being communicated to the mechanical winding mechanism (26) of the watch via the mechanical device for transmission of movement (10, 12, 13).

2. Portable apparatus as claimed in claim 1, **characterised in that** it is arranged so that the displacement of the said at least one moveable element is effected during at least one action inherent to usage of the apparatus.

3. Portable apparatus as claimed in claim 2, **characterised in that** said action inherent to usage of the portable apparatus is in particular the opening of a flap or of a battery compartment cover, the sliding of a screen, the pivoting or the sliding of the watch (1) allowing access to a precise function.

4. Portable apparatus as claimed in any one of claims 1 to 3, **characterised in that** it has two parts which can fold one onto the other and of which one carries the watch, the opening of the apparatus taking place about an axis of rotation which forms part of the movement transmission device (10, 12, 13).

5. Portable apparatus as claimed in any one of claims 1 to 3, **characterised in that** it has two parts which can move with respect to each other in two parallel planes and of which one carries the watch, the winding mechanism of the watch (1) being actuated during sliding of the two moveable parts with respect to each other.

6. Portable apparatus as claimed in claim 5, **characterised in that** the winding mechanism is arranged to be actuated by means of the movement transmission device comprising a gear train (17) arranged to be rotationally driven by the displacement of a rack (16) carried by one of the parts (14) of the apparatus.

7. Portable apparatus as claimed in any one of claims 1 to 3, **characterised in that** the watch (1) is arranged to be displaced alone in a pivoting or translational manner with respect to the entire apparatus.

8. Portable apparatus as claimed in claim 7, **characterised in that** the displacement of the watch (1) is arranged to mechanically contribute to the winding of the watch (1) via the mechanical device for transmission of movement associated with a hinge (21) permitting the said displacement of the watch (1).

9. Portable apparatus as claimed in claim 8, **characterised in that** the displacement of the watch (1) makes it possible to reveal an external screen (18), a battery pack or any other subjacent display screen linked to a telephone functionality or to a functionality useful for the apparatus as a portable apparatus, for example a battery charge indicator or indicator of connection to a communication network.

10. Portable apparatus as claimed in any one of claims 7 to 9, **characterised in that** the displacement of the watch (1) makes it possible to reveal a functionality which is not useful to the telephone, within a cavity in which the watch (1) is arranged in a folded manner, for example a compass, a photograph or an item which has been personalised by engraving.

11. Portable apparatus as claimed in any one of claims 7 to 10, **characterised in that** it has two parts which can move with respect to each other, the independent displacement of the watch (1) permitting access to a portion of the moveable part located under the watch (1) and on which it is not articulated, without it being necessary to open the portable apparatus.

12. Portable apparatus as claimed in any one of the preceding claims, **characterised in that** the mechanism for winding the watch (1) is arranged to be actuated when the said at least one moveable element is being moved into a first, so-called open configuration, whether this involves, for example, the opening of the apparatus, of a flap, the unfolding or sliding of the watch (1), but to be disengaged when the said at least one moveable element is being moved into a second, so-called closed configuration.

13. Portable apparatus as claimed in any one of claims 1 to 3, **characterised in that** it has two parts which can fold one onto the other, the movement transmission device having a linear and free mass system transferring the kinetic energy used during each movement of one of the parts (2) to the mechanism for winding the calibre (26).

14. Portable apparatus as claimed in any one of claims 1 to 3, **characterised in that** the movement transmission device comprises an oscillating mass system transferring the kinetic energy of each displacement of the said at least one moveable element of the apparatus to the mechanism for winding the calibre (26).

15. Portable apparatus as claimed in claim 14, **characterised in that** the oscillating mass (23) is weighted and an arm (25) is arranged to connect the mass to the winding mechanism, this arm extending outside the zone of the apparatus where the watch is arranged.

16. Portable apparatus as claimed in claim 14 or 15, **characterised in that** the oscillating mass (23) is placed laterally with respect to the watch calibre (26) in order to limit the thickness of the apparatus fitted with the device.

17. Portable apparatus as claimed in any one of claims 1 to 3, **characterised in that** it has two parts which can fold one onto the other and of which one carries the watch, the movement transmission device having a system for full rotation of the calibre, transferring the kinetic energy used during each movement of one of the parts (2) to the mechanism for winding the calibre (26).

18. Portable apparatus as claimed in any one of claims 1 to 3, **characterised in that** it has one or a plurality of rotationally moveable thumbwheels (35) connected to the movement transmission device in order to wind the mechanical watch.

19. Portable apparatus as claimed in any one of claims 1 to 3, **characterised in that** it has one or a plurality of keypad keys (40), the depression of which is converted into a rotational movement by the movement transmission device in order to wind the mechanical watch.

20. Portable apparatus as claimed in claim 18 or 19, **characterised in that** the movement transmission device has a system of gears.

21. Portable apparatus as claimed in any one of the preceding claims, **characterised in that** it has a mechanism for disengaging the winding mechanism when winding has been effected fully.
